# EUROPÄISCHE PATENTSCHRIFT

(11) **EP 1 635 093 B1**
(45) Veröffentlichungstag und Bekanntmachung des Hinweises auf die Patenterteilung: **05.11.2008**
(21) Anmeldenummer: 04023133.4
(22) Anmeldetag: 29.09.2004
(51) Int. Cl.: F16J 15/08

(54) **Zylinderkopfdichtung**
Cylinder head gasket
Joint de culasse

(30) Priorität: 10.09.2004 DE 102004044851
(43) Veröffentlichungstag der Anmeldung: 15.03.2006
(73) Patentinhaber: ElringKlinger AG, 72581 Dettingen (DE)
(72) Erfinder: Tiefenbach, Thomas, 72581 Dettingen (DE); Diez, Armin, 73252 Lenningen (DE); Fritz, Wolfgang, 72555 Metzingen 3 (DE)
(74) Vertreter: Haecker, Walter

(56) Entgegenhaltungen:
- EP-A- 1 298 364
- EP-A- 1 298 365
- PATENT ABSTRACTS OF JAPAN Bd. 1999, Nr. 03, 31. März 1999 (1999-03-31) & JP 10 339372 A (JAPAN METAL GASKET CO LTD), 22. Dezember 1998 (1998-12-22)

## Beschreibung

Die Erfindung betrifft eine Zylinderkopfdichtung mit den Merkmalen des Oberbegriffs des Patentanspruchs 1, d.h. eine Zylinderkopfdichtung mit einer ein- oder mehrlagigen, mindestens im wesentlichen metallischen Dichtungsplatte, welche für eine eine Brennraum-Durchgangsöffnung der Dichtung umschließende, elastisch höhenverformbare Abdichtsicke einen die Sickenverformung begrenzenden so genannten Doppelstopper mit einer radial innerhalb und einer radial außerhalb der Abdichtsicke angeordneten Verformungsbegrenzungsvorrichtung aufweist.

Eine derartige Zylinderkopfdichtung ergibt sich aus der EP-1 298 364-A der ElringKlinger AG (siehe Zeilen 1 - 3 der Seite 6), wobei bei einer Dichtung mit einer mehrlagigen Dichtungsplatte die Verformungsbegrenzungsvorrichtungen (Stopper) alle an der mit der Abdichtsicke versehenen Metallblechlage (so genannte Funktionslage) oder an einer oder mehreren der anderen Lagen vorgesehen sein können, es aber auch möglich ist, einen Stopper an der Funktionslage und einen anderen Stopper an einer anderen Lage vorzusehen. Bei einer ersten Ausführungsform der Zylinderkopfdichtung nach der EP-1 298 364-A ist ein einziger, zwischen der Brennraum-Durchgangsöffnung und der zugehörigen Abdichtsicke angeordneter Stopper vorgesehen, welcher von einem wabenförmigen Muster, das die Brennraum-Durchgangsöffnung als in sich geschlossener Ring umgibt, aus aus der Funktionslage herausgeprägten noppenartigen Erhebungen gebildet wird. Bei zwei weiteren Ausführungsformen tritt an die Stelle des Noppenmusters entweder eine in die Funktionslage eingeprägte Sicke, welche in einer Draufsicht auf die Dichtungsplatte bzw. die Funktionslage einen sich in Umfangsrichtung der Brennraum-Durchgangsöffnung erstreckenden Mäander bildet, oder ein die Brennraum-Durchgangsöffnung umgebender Kranz von kurzen, in die Funktionslage eingeprägten und in bezüglich der Brennraum-Durchgangsöffnung radial verlaufenden Sicken.

Im Abschnitt [0028] der EP-1 298 364-A wird erwähnt, dass ein in diesem Dokument offenbarter Stopper auch radial außerhalb (bezüglich der Brennraum-Durchgangsöffnung) der Abdichtsicke vorgesehen sein könnte oder dass sowohl radial innerhalb, als auch radial außerhalb der Abdichtsicke ein solcher Stopper liegen könnte. Ferner wird im Abschnitt [0030] der EP-1 298 364-A bezüglich eines Stoppers in Form einer radial innerhalb der Abdichtsicke liegenden Mäandersicke darauf hingewiesen, dass die Kontur der Brennraum-Durchgangsöffnung erst nach der Herstellung de Stoppers aus der mit dem Stopper versehenen Metallblechlage ausgestanzt werden kann, wobei Teile des zunächst hergestellten Mäandersicken-Stoppers, nämlich die radial innen liegenden Mäandersickenbögen, an- oder weggestanzt werden.

Aus der EP-1 298 365-A der ElringKlinger AG ergibt sich eine mehrlagige metallische Zylinderkopfdichtung mit zwei Funktionslagen mit jeweils einer elastischen, eine Brennraum-Durchgangsöffnung umschließenden Abdichtsicke und einer zwischen den Funktionslagen angeordneten weiteren Metalllage, die mit einem zwischen den Abdichtsicken und der Brennraum-Durchgangsöffnung liegenden Stopper versehen ist, der von einem durch Fließpressen erzeugten zweidimensionalen Muster von diskreten, napfartigen Vertiefungen und letzteren zugeordneten, durch beim Einprägen der Vertiefungen verdrängtes Material gebildeten Erhebungen gebildet wird, wobei der Stopper auf beiden Seiten dieser Metalllage Erhebungen und Vertiefungen aufweist und infolgedessen die Verformung beider Abdichtsicken begrenzen kann.

Der Erfindung lag die Aufgabe zugrunde, eine Zylinderkopfdichtung der eingangs erwähnten Art zu schaffen, welche hinsichtlich der Abdichtung um eine Brennraum-Durchgangsöffnung herum sowie der Stopperfunktion dauerhaft bessere Eigenschaften aufweist als die vorstehend beschriebenen bekannten Dichtungen.

Diese Aufgabe wird erfindungsgemäß durch eine Zylinderkopfdichtung gemäß Patentanspruch 1 oder Patentanspruch 3 gelöst, welche mindestens eine Metallblechlage, mindestens eine Brennraum-Durchgangsöffnung, eine in einer Metalllage ausgebildete, die Brennraum-Durchgangsöffnung in sich geschlossen umgebende, elastisch höhenverformbare Abdichtsicke und - bezogen auf die letztere - sowohl radial innerhalb, als auch radial außerhalb der Abdichtsicke eine die Sickenverformung begrenzende, die Brennraum-Durchgangsöffnung mindestens teilweise umgebende Verformungsbegrenzungsvorrichtung aufweist, die - in einer Draufsicht auf die Dichtungsplatte - der Abdichtsicke benachbart und in einer Metalllage durch eine solche Verformung der letzteren ausgebildet ist, dass die Metalllage in mindestens einer ihrer Hauptoberflächen im Bereich der Verformungsbegrenzungsvorrichtung mindestens eine Erhebung aufweist und die Gesamtdicke der Metalllage im Bereich der Verformungsbegrenzungsvorrichtung größer ist als die originäre Dicke der Metalllage. Zur Lösung der gestellten Aufgabe wird erfindungsgemäß vorgeschlagen, eine solche Zylinderkopfdichtung so auszubilden, dass die beiden Verformungsbegrenzungsvorrichtungen unterschiedlich und gemäß den kennzeichnenden Teilen der Ansprüche 1 und 3 gestaltet sind.

Wenn in den Patentansprüchen 1 und 3 davon die Rede ist, dass sowohl radial innerhalb, als auch radial außerhalb der Abdichtsicke eine Verformungsbegrenzungsvorrichtung - im folgenden der Einfachheit halber Stopper genannt - vorgesehen ist, so darf das Wort "eine" nicht als "eine einzige" interpretiert werden. Entsprechend gilt, daß die beiden Stopper an der mit der Abdichtsicke versehenen Metallage vorgesehen sein können, daß aber auch ein Stopper oder beide Stopper an einer anderen oder an zwei anderen Metallagen ausgebildet sein können. Der die mäanderförmige Sicke aufweisende Stopper könnte auch ein weiteres Stopperelement oder weitere Stopperelemente umfassen. Schließlich kann ein Stopper an einer mit einer Abdichtsicke versehenen Funktionslage und ein anderer Stopper an einer gleichfalls mit einer Abdichtsicke versehenen anderen Funktionslage vorgesehen sein.

Grundgedanke der vorliegenden Erfindung ist es also, zwei Stopper von grundsätzlich unterschiedlicher Gestaltung miteinander zu kombinieren, und zwar einen Stopper, der eine mindestens teilweise einen mäanderförmigen Verlauf aufweisende Sicke besitzt, mit einem Stopper aus insbesondere geprägten (nach Art eines Tiefzieh- oder Fließpreß-Vorgangs) diskreten, d. h. vereinzelten, Erhebungen, eine Kombination, welche zu einer ganzen Reihe von Vorteilen führt:

Mit einer ringförmig in sich geschlossenen Mäandersicke als Stopper läßt sich um die Brennraum-Durchgangsöffnung herum zusätzlich zu der von der zu schützenden Abdichtsicke gebildeten Abdichtzone eine zweite Abdichtzone schaffen (jedenfalls dann, wenn der Stopper trägt, d. h. gepreßt wird). Andererseits läßt sich ein von diskreten Erhebungen gebildeter Stopper höher belasten, ohne daß die Stopperhöhe verringert wird, da bei einer Mäandersicke die Anzahl der Mäanderschlingen je Längeneinheit - in Umfangsrichtung der Brennraum-Durchgangsöffnung gemessen - aus verformungstechnischen Gründen begrenzt ist (für die bogenförmigen "Umkehrbereiche" einer Mäandersicke wird Platz benötigt), während sich die "Packungsdichte" geprägter diskreter, d. h. vereinzelter Erhebungen nahezu beliebig steigern läßt, was mit einer Erhöhung der Verformungsfestigkeit des Stoppers einhergeht. Ein sogenannter Doppelstopper wird im allgemeinen in Zylinderkopfdichtungen eingesetzt, welche für Motoren mit Zylinderlaufbuchsen vorgesehen sind; bei solchen Motoren muß im Zuge des Motorbetriebs mit einer gewissen Absenkung einer in einen Motorblock eingesetzten Zylinderlaufbuchse gerechnet werden, was die Wirkung des radial innerhalb der Abdichtsicke und über der Laufbuchse liegenden Stoppers vermindert, weshalb ein radial außerhalb der Abdichtsicke und radial außerhalb der Laufbuchse über dem eigentlichen Motorblock liegender weiterer Stopper eingesetzt wird, um die Abdichtsicke zuverlässig dauerhaft gegen übermäßige Verformungen zu schützen. Da nun die Zylinderlaufbuchse, der Motorblock und der Zylinderkopf (zwischen denen die Zylinderkopfdichtung eingespannt wird) üblicherweise aus unterschiedlichen Werkstoffen bestehen, kann mit unterschiedlich gestalteten Stoppern auf die unterschiedlichen Werkstoffeigenschaften Rücksicht genommen werden. Schließlich ist ein Werkzeug zum Prägen diskreter Erhebungen einfacher und billiger als ein Werkzeug zum Prägen einer Mäandersicke.

Vorzugsweise wird bei einer erfindungsgemäßen Zylinderkopfdichtung die Mäandersicke radial innerhalb der eigentlichen, durch den Stopper zu schützenden Abdichtsicke, d. h. zwischen dieser und der Brennraum-Durchgangsöffnung angeordnet, um schon vor der Abdichtsicke durch die vorstehend erwähnte zweite Abdichtzone gegen Brenngase abzudichten und die durch den Stopper zu schützende eigentliche Abdichtsicke gegen die heißen Brenngase abzuschirmen, wodurch das Risiko einer Verschlechterung des federelastischen Verhaltens der Abdichtsicke verringert oder ganz beseitigt wird. Die andere und anders gestaltete Verformungsbegrenzungsvorrichtung liegt dann - von der Brennraum-Durchgangsöffnung aus gesehen - hinter der durch den Doppelstopper zu schützenden Abdichtsicke.

Gerade dann, wenn der radial innerhalb der zu schützenden Abdichtsicke liegende Stopper als Mäandersicke gestaltet werden soll, können sehr nahe beieinanderliegende Brennräume dazu führen, daß die zwischen einander benachbarten Durchgangsöffnungen liegenden Stegbereiche der Zylinderkopfdichtung sehr schmal werden, so daß im Stegbereich die zwischen einer Brennraum-nahen Abdichtsicke und dem Rand einer benachbarten Brennraum-Durchgangsöffnung verbleibende Ringzone nicht mehr genügend Platz bietet, um auch dort den radial inneren Stopper als Mäandersicke zu gestalten. In diesem Fall kann im Stegbereich oder über einen Teil des Stegbereichs die den radial innenliegenden Stopper bildende Sicke anders als mäanderförmig ausgebildet werden, z. B. kreisbogenförmig, und wenn man darauf verzichten will oder kann, daß der radial innenliegende Stopper eine zweite Abdichtzone bildet, könnten die Mäanderschlingen verbindende Umkehrbögen der Sicke auch weggestanzt werden, wenn nach dem Umformprozeß der betreffenden Metallage aus dieser die Brennraum-Durchgangsöffnung ausgestanzt wird. Auf diese Ausführungsformen sei deshalb verwiesen, weil bei der Definition des Grundgedankens der vorliegenden Erfindung davon die Rede ist, daß die eine Verformungsbegrenzungsvorrichtung eine Sicke aufweist, welche über wenigstens einen Teil ihrer Länge einen zumindest nahezu vollständigen Mäander bildet.

Bei einer bevorzugten Ausführungsform der erfindungsgemäßen Zylinderkopfdichtung weist in einer Draufsicht auf die Dichtungsplatte die andere Verformungsbegrenzungsvorrichtung ein zweidimensionales Muster von diskreten, noppenartigen Erhebungen auf, die vorzugsweise nach Art eines Wabenmusters angeordnet sind, um eine möglichst hohe Packungsdichte zu erzielen. Bei einer alternativen Ausführungsform werden die Erhebungen der anderen Verformungsbegrenzungsvorrichtung (in einer Draufsicht auf die Dichtungsplatte) von sich bezüglich der Brennraum-Durchgangsöffnung ungefähr in radialer Richtung oder schräg hierzu erstreckenden, kurzen Sicken gebildet, welche vorzugsweise einen die Brennraum-Durchgangsöffnung ganz oder teilweise umschließenden Kranz solcher kurzen Sicken bilden. Die Erhebungen können auch in Gruppen angeordnet sein, zwischen denen (in Umfangsrichtung der Brennraum-Durchgangsöffnung gesehen) stopperlose Bereiche liegen, um dort z. B. andere Durchgangsöffnungen der Dichtungsplatte, wie Schraubenlöcher, unterzubringen oder weil zwischen einander benachbarten Durchgangsöffnungen der Dichtungsplatte nicht genügend Platz für einen durchgehenden Stopper vorhanden ist. Nur der Vollständigkeit halber sei noch erwähnt, daß ein Stopper auch eine Mischform aus den beiden vorstehend beschriebenen anderen Verformungsbegrenzungsvorrichtungen sein und eine Mischung aus Gruppen noppenartiger Erhebungen und Gruppen von kurzen Sicken aufweisen kann.

Außerdem kann ein Stopper oder jeder Stopper einer erfindungsgemäßen Zylinderkopfdichtung um eine Brennraum-Durchgangsöffnung herum ein Höhenprofil und/oder ein Breitenprofil (in einer Draufsicht auf die betreffende Metallage) aufweisen, so wie dies z. B. in der EP-1 298 364-A, der EP-1 298 365-A oder der US-A-6 036 195 offenbart wird.

Wie bereits erwähnt, können bei einer mehrlagigen Zylinderkopfdichtung der radial innere und der radial äußere Stopper jeweils an einer der Metallagen vorgesehen werden. Dann kann es sich empfehlen, die Mäandersicke an einer dem Motorblock bzw. einer Zylinderlaufbuchse zugewandten Lage und den von diskreten Erhebungen gebildeten Stopper an einer dem Zylinderkopf zugewandten Lage vorzusehen.

Weitere Merkmale, Vorteile und Einzelheiten der Erfindung ergeben sich aus den beigefügten Ansprüchen und/oder aus der nachfolgenden Beschreibung bzw. der beigefügten zeichnerischen Darstellung zweier besonders vorteilhafter Ausführungsformen der erfindungsgemäßen Zylinderkopfdichtung; in der Zeichnung zeigen:
- Fig. 1: einen Teil der ersten Ausführungsform sowie einen Teil eines mit einer Zylinderlaufbuchse versehenen Motorblocks in perspektivischer Darstellung und im Schnitt, und
- Fig. 2: eine der Fig. 1 entsprechende Darstellung mit der zweiten Ausführungsform der erfindungsgemäßen Zylinderkopfdichtung.

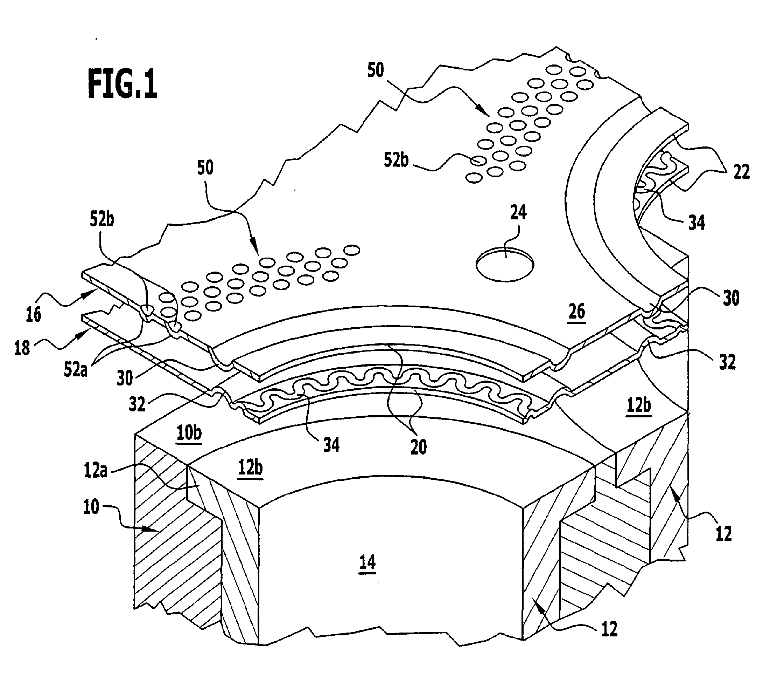

Die Fig. 1 zeigt einen Teil eines Kurbelgehäuses oder Motorblocks 10, in den eine Zylinderlaufbuchse 12 eingesetzt ist, deren Bohrung einen Teil einer Brennkammer 14 des Motors bildet. Die Laufbuchse 12 hat oben einen Buchsenbund 12a, dessen obere Stirnfläche eine Dichtfläche 12b bildet, die mit einer von einer oberen Stirnfläche des Motorblocks 10 gebildeten Dichtfläche 10b bündig, d. h. niveaugleich sein soll.

Zwischen den Dichtflächen 10b, 12b und einer diesen gegenüberliegenden Dichtfläche eines nicht dargestellten Zylinderkopfs wird eine Zylinderkopfdichtung eingespannt, welche bei der dargestellten Ausführungsform eine Dichtungsplatte aus einer oberen und einer unteren Funktionslage 16 bzw. 18 aus Federstahlblech hat - dies könnten die einzigen Metallagen der Dichtungsplatte der erfindungsgemäßen Zylinderkopfdichtung sein, die letztere könnte aber auch noch weitere Metallagen aufweisen, z. B. eine zwischen den beiden Funktionslagen 16, 18 liegende glatte, d. h. ebene Lage und/oder eine obere und/oder untere Decklage über der Funktionslage 16 bzw. unter der Funktionslage 18. Aus allen Lagen der Zylinderkopfdichtung sind übereinanderliegende, deckungsgleiche Öffnungen ausgestanzt, wobei jeweils übereinanderliegende Öffnungen eine Brennraum-Durchgangsöffnung 20 bzw. 22 bilden, die der Brennkammer 14 bzw. einer weiteren, in Fig. 1 nicht gezeigten Brennkammer des Motors zugeordnet ist. Ferner wurde in Fig. 1 noch eine in gleicher Weise erzeugte Schrauben-Durchgangsöffnung 24 für eine Zylinderkopfschraube angedeutet. Zwischen einander benachbarten Brennraum-Durchgangsöffnungen weist die Dichtungsplatte der Zylinderkopfdichtung jeweils einen Steg 26 auf, von dem die Fig. 1 nur einen Endbereich zeigt, der in einen zwickelförmigen Bereich der Dichtungsplatte zwischen den beiden Brennraum-Durchgangsöffnungen 20 und 22 übergeht, in dem die Schrauben-Durchgangsöffnung 24 liegt.

Um jede Brennraum-Durchgangsöffnung herum ist jede der Funktionslagen 16, 18 mit einer federelastisch höhenverformbaren Abdichtsicke 30 bzw. 32 versehen, welche die zugeordnete Brennraum-Durchgangsöffnung in Gestalt eines in sich geschlossenen Kreisrings umgibt. Die beiden Abdichtsicken 30, 32 weisen mit ihren konvexen Seiten aufeinander zu und liegen bei eingebauter Dichtung abdichtend gegeneinander an. Radial innerhalb der Abdichtsicke 32 ist die untere Funktionslage 18 mit einem inneren Stopper versehen, der als Mäandersicke 34 gestaltet ist, d. h. als in der Draufsicht mäanderförmige Sicke, die insbesondere einen in sich geschlossenen, die Brennraum-Durchgangsöffnung 20 umschließenden Ring bildet und durch Prägen der unteren Funktionslage 18 in dieser erzeugt wurde, und zwar so, daß die Mäandersicke 34 gemäß Fig. 1 nach oben über die Funktionslage 18 vorspringt, d. h. in derselben Richtung wie die Abdichtsicke 32; die Höhe des von der Mäandersicke 34 gebildeten Vorsprungs ist jedoch geringer als die Höhe des von der Abdichtsicke 32 gebildeten Vorsprungs, so daß dann, wenn die Zylinderkopfdichtung gepreßt wird, sich zunächst die Abdichtsicke 32 federelastisch etwas abflacht, ehe die Mäandersicke 34 zum Tragen kommt (nämlich an dem ebenen Ringbereich der oberen Funktionslage 16 radial innerhalb deren Abdichtsicke 30).

Von der jeweiligen Brennraum-Durchgangsöffnung 20 bzw. 22 in radialer Richtung nach außen gesehen befindet sich in der oberen Funktionslage 16 hinter der Abdichtsicke 30 ein radial äußerer bzw. hinterer Stopper 50, welcher von diskreten, noppenförmigen Erhebungen 52a gebildet wird, zu deren Erzeugung napfartige Vertiefungen 52b in die obere Funktionslage 16 eingeprägt wurden. Die Erhebungen 52a erheben sich über die Funktionslage 16 in derselben Richtung wie die Abdichtsicke 30, die Höhe der Erhebungen ist jedoch geringer als diejenige der Abdichtsicke 30, so daß sie - ebenso wie die Mäandersicke 34 - eine gewisse federelastische Abflachung der Abdichtsicke 30 zulassen, wenn die Zylinderkopfdichtung gepreßt wird. Die Erhebungen 52a bzw. die Vertiefungen 52b sind bei der dargestellten Ausführungsform nach Art eines Wabenmusters angeordnet, um eine möglichst große "Packungsdichte" der Erhebungen zu erzielen. Bevorzugt bildet das von den Erhebungen 52a gebildete Muster einen zur zugeordneten Brennraum-Durchgangsöffnung 20 bzw. 22 konzentrischen Ring, der jedoch Unterbrechungen dort aufweist, wo sich Schrauben-Durchgangsöffnungen 24 und Stege 26 befinden. Alternativ könnte die Breite des von den Erhebungen 52a gebildeten Musters so variieren, daß auch um die Schrauben-Durchgangsöffnungen 24 herum und/oder im Bereich der Stege 26 Erhebungen 52a vorhanden sind.

Bei der dargestellten Ausführungsform stützen sich bei gepreßter Zylinderkopfdichtung die Erhebungen 52a auf einem ebenen Bereich der unteren Funktionslage 18 ab, sie könnten sich aber ebenso wie die Mäandersicke 34 auf einer Metallage abstützen, welche zwischen den Funktionslagen 16 und 18 angeordnet ist.

Wie die Fig. 1 zeigt, liegen die hinteren Stopper 50 über der Dichtfläche 10b des Motorblocks 10, während die Abdichtsicken 30 und 32 sowie die den vorderen oder radial inneren Stopper bildende Mäandersicke 34 über der Dichtfläche 12b der Zylinderlaufbuchse 12 liegen. Die Abdichtsicken 30, 32 könnten aber auch radial außerhalb der Laufbuchse 12 liegen.

Bei der in Fig. 1 dargestellten Ausführungsform haben die Erhebungen 52a bzw. die Vertiefungen 52b ungefähr die Form von Kugelabschnitten und sämtlich dieselbe Form, sie könnten aber auch anderen Formen und/oder unterschiedliche Formen haben, z. B. könnten die Formen der Vertiefungen 52b Abschnitten von Ellipsoiden oder einem Pyramidenstumpf entsprechen.

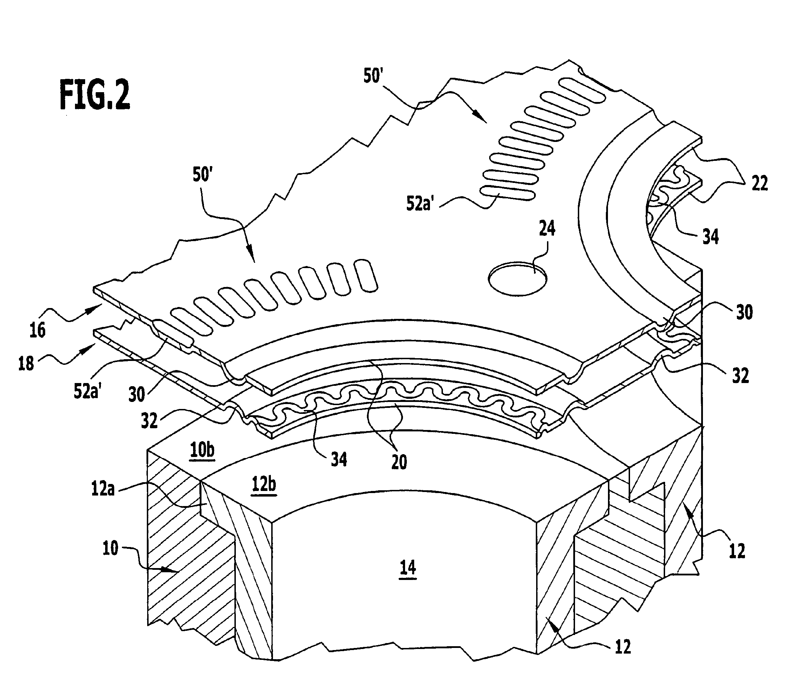

Die in Fig. 2 dargestellte Ausführungsform unterscheidet sich von der Ausführungsform gemäß Fig. 1 nur in der Gestaltung der radial äußeren bzw. hinteren Stopper, so daß im folgenden nur diese Stopper beschrieben werden und für alle übrigen Elemente in Fig. 2 dieselben Bezugszeichen wie in Fig. 1 verwendet wurden.

Bei der Ausführungsform nach Fig. 2 werden die hinteren Stopper 50' jeweils von einem Kranz eingeprägter kurzer Sicken 52a' gebildet, die bezüglich der zugeordneten Brennraum-Durchgangsöffnung 20 bzw. 22 in radialer Richtung verlaufen; diese Sicken könnten mit der radialen Richtung aber auch einen vorzugsweise kleinen spitzen Winkel einschließen. Im Vergleich zu einer Mäandersicke lassen sich die Sicken 52a' - in Umfangsrichtung der zugehörigen Brennraum-Durchgangsöffnung gemessen - sehr nahe beieinander anordnen, da, anders als bei einer Mäandersicke, kein Platz für U-förmige Verbindungsbögen benötigt wird.

Was vorstehend bezüglich Unterbrechungen oder einer Breitenprofilierung der Stopper 50 gesagt wurde, gilt entsprechend für die Stopper 50' (bei einer Breitenprofilierung eines Stoppers 50' weisen die Sicken 52a' also unterschiedliche Längen auf).

## Patentansprüche

1. Zylinderkopfdichtung mit einer mindestens im wesentlichen metallischen Dichtungsplatte, welche mindestens eine Metallblechlage (16; 18), mindestens eine Brennraum-Durchgangsöffnung (20; 22), eine in einer Metalllage ausgebildete, die Brennraum-Durchgangsöffnung in sich geschlossen umgebende, elastisch höhenverformbare Abdichtsicke (30; 32) und - bezogen auf die letztere - sowohl radial innerhalb, als auch radial außerhalb der Abdichtsicke eine die Sickenverformung begrenzende, die Brennraum-Durchgangsöffnung mindestens teilweise umgebende Verformungsbegrenzungsvorrichtung (34, 50; 34, 50') aufweist, die - in einer Draufsicht auf die Dichtungsplatte - der Abdichtsicke benachbart und in einer Metalllage (16; 18) durch eine solche Verformung der letzteren ausgebildet ist, dass die Metalllage in mindestens einer ihrer Hauptoberflächen im Bereich der Verformungsbegrenzungsvorrichtung mindestens eine Erhebung (34, 52a; 34, 52a') aufweist und die Gesamtdicke der Metalllage im Bereich der Verformungsbegrenzungsvorrichtung größer ist als die originäre Dicke der Metalllage, **dadurch gekennzeichnet, dass** die beiden Verformungsbegrenzungsvorrichtungen (34, 50; 34, 50') unterschiedlich gestaltet sind, dass die eine, radial innerhalb der Abdichtsicke (30, 32) angeordnete Verformungsbegrenzungsvorrichtung eine die Brennraum-Durchgangsöffnung umschließende und in sich geschlossene Sicke (34) aufweist, welche in einer Draufsicht auf die Dichtungsplatte über wenigstens einen Teil ihrer Länge einen sich in Umfangsrichtung der Brennraum-Durchgangsöffnung (20; 22) erstreckenden Mäander bildet, und dass die andere, radial außerhalb der Abdichtsicke angeordnete Verformungsbegrenzungsvorrichtung (50; 50') eine Vielzahl von in einer Draufsicht auf die Dichtungsplatte sowie in Umfangsrichtung der Brennraum-Durchgangsöffnung diskreten Erhebungen (52a; 52a') aufweist.

2. Zylinderkopfdichtung nach Anspruch 1, **dadurch gekennzeichnet, dass** in einer Draufsicht auf die Dichtungsplatte die andere Verformungsbegrenzungsvorrichtung (50; 50') ein zweidimensionales Muster von diskreten Erhebungen in Form noppenartiger Erhebungen (52a) und/oder in Form von sich bezüglich der Brennraum-Durchgangsöffnung (20; 22) ungefähr in radialer Richtung oder schräg hierzu erstreckenden kurzen Sicken (52a') aufweist.

3. Zylinderkopfdichtung mit einer mindestens im wesentlichen metallischen Dichtungsplatte, welche mindestens eine Metallblechlage (16; 18), mindestens eine Brennraum-Durchgangsöffnung (20; 22), eine in einer Metalllage ausgebildete, die Brennraum-Durchgangsöffnung in sich geschlossen umgebende, elastisch höhenverformbare Abdichtsicke (30; 32) und - bezogen auf die letztere - sowohl radial innerhalb, als auch radial außerhalb der Abdichtsicke eine die Sickenverformung begrenzende, die Brennraum-Durchgangsöffnung mindestens teilweise umgebende Verformungsbegrenzungsvorrichtung (34, 50; 34, 50') aufweist, die - in einer Draufsicht auf die Dichtungsplatte - der Abdichtsicke benachbart und in einer Metalllage (16; 18) durch eine solche Verformung der letzteren ausgebildet ist, dass die Metalllage in mindestens einer ihrer Hauptoberflächen im Bereich der Verformungsbegrenzungsvorrichtung mindestens eine Erhebung (34, 52a; 34, 52a') aufweist und die Gesamtdicke der Metalllage im Bereich der Verformungsbegrenzungsvorrichtung größer ist als die originäre Dicke der Metalllage, **dadurch gekennzeichnet, dass** die beiden Verformungsbegrenzungsvorrichtungen (34, 50; 34, 50') unterschiedlich gestaltet sind, dass die eine Verformungsbegrenzungsvorrichtung eine Sicke (34) aufweist, welche in einer Draufsicht auf die Dichtungsplatte über wenigstens einen Teil ihrer Länge einen sich in Umfangsrichtung der Brennraum-Durchgangsöffnung (20; 22) erstreckenden, zumindest nahezu vollständigen Mäander bildet, und dass die andere Verformungsbegrenzungsvorrichtung (50; 50') eine Vielzahl von in einer Draufsicht auf die Dichtungsplatte sowie in Umfangsrichtung der Brennraum-Durchgangsöffnung diskreten Erhebungen (52a; 52a') aufweist, welche in einer Draufsicht auf die Dichtungsplatte ein zweidimensionales Muster von diskreten, noppenartigen Erhebungen (52a) bilden.

4. Zylinderkopfdichtung nach Anspruch 2 oder 3, **dadurch gekennzeichnet, dass** die noppenartigen Erhebungen (52a) der anderen Verformungsbegrenzungsvorrichtung (50) nach Art eines Wabenmusters angeordnet sind.

5. Zylinderkopfdichtung nach einem der Ansprüche 1 bis 4, **dadurch gekennzeichnet, dass** die Erhebungen (52a) der anderen Verformungsbegrenzungsvorrichtung (50) alle gleich gestaltet sind.

6. Zylinderkopfdichtung nach einem der Ansprüche 2 bis 5, **dadurch gekennzeichnet, dass** die noppenartigen Erhebungen (52a) in Gruppen angeordnet sind, welche in Umfangsrichtung der Brennraum-Durchgangsöffnung (20; 22) in Abständen voneinander angeordnet sind.

7. Zylinderkopfdichtung nach Anspruch 2, **dadurch gekennzeichnet, dass** die kurzen Sicken (52a') einen die Brennraum-Durchgangsöffnung (20; 22) ganz oder teilweise umschließenden Kranz von kurzen Sicken bilden.

8. Zylinderkopfdichtung nach Anspruch 7, **dadurch gekennzeichnet, dass** die kurzen Sicken (52a') in Gruppen angeordnet sind, welche in Umfangsrichtung der Brennraum-Durchgangsöffnung (20; 22) in Abständen voneinander angeordnet sind.

9. Zylinderkopfdichtung nach Anspruch 2, **dadurch gekennzeichnet, dass** die kurzen Sicken (52a') alle gleich gestaltet sind.

10. Zylinderkopfdichtung nach einem der vorstehenden Ansprüche, **dadurch gekennzeichnet, dass** die Mäandersicke (34) in einer ersten und die andere Verformungsbegrenzungsvorrichtung (50; 50') in einer zweiten Metalllage (16 bzw. 18) der Dichtungsplatte ausgebildet ist.

11. Zylinderkopfdichtung nach Anspruch 10, **dadurch gekennzeichnet, dass** die Mäandersicke (34) an einer bei eingebauter Dichtung dem Zylinderkopf nahen Metalllage und die andere Verformungsbegrenzungsvorrichtung (50; 50') an einer dem Motorblock nahen Metalllage vorgesehen ist.

12. Zylinderkopfdichtung nach einem der vorstehenden Ansprüche für einen Motor mit einer Zylinderlaufbuchse (12), **dadurch gekennzeichnet, dass** die Abdichtsicke (30; 32) und die Verformungsbegrenzungsvorrichtungen (34, 50; 34, 50') so angeordnet sind, dass bei eingebauter Dichtung die Mäandersicke (34) über der Zylinderlaufbuchse (12) und die andere Verformungsbegrenzungsvorrichtung (50; 50') radial außerhalb der Zylinderlaufbuchse liegt.

13. Zylinderkopfdichtung nach Anspruch 12, **dadurch gekennzeichnet, dass** auch die Abdichtsicke (30; 32) über der Zylinderlaufbuchse (12) liegt.

## Claims

1. Cylinder head gasket comprising an at least substantially metallic gasket plate which comprises at least one sheet metal layer (16; 18), at least one combustion chamber through-opening (20; 22), an elastically height-deformable sealing bead (30; 32) which is formed in a metal layer and surrounds the combustion chamber through-opening in a manner closed within itself, and - in relation to said sealing bead - both radially inside and radially outside the latter a deformation limiting device (34, 50; 34, 50') which limits the bead deformation and at least partially surrounds the combustion chamber through-opening, which deformation limiting device - as seen in a plan view of the gasket plate - is formed adjacent to the sealing bead and in a metal layer (16; 18) by a deformation of the latter such that the metal layer has at least one raised area (34, 52a; 34, 52a') in at least one of its main surfaces in the region of the deformation limiting device, and the total thickness of the metal layer in the region of the deformation limiting device is greater than the original thickness of the metal layer, **characterised in that** the two deformation limiting devices (34, 50; 34, 50') are configured differently, **in that** one deformation limiting device arranged radially inside the sealing bead (30, 32) comprises a bead (34) which surrounds the combustion chamber through-opening and is closed within itself, which bead - as seen in a plan view of the gasket plate - forms over at least part of its length a meander which extends in the circumferential direction of the combustion chamber through-opening (20; 22), and **in that** the other deformation limiting device (50; 50') arranged radially outside the sealing bead comprises a plurality of discrete raised areas (52a; 52a') as seen in a plan view of the gasket plate and in the circumferential direction of the combustion chamber through-opening.

2. Cylinder head gasket according to claim 1,
**characterised in that** - as seen in a plan view of the gasket plate - the other deformation limiting device (50; 50') comprises a two-dimensional pattern of discrete raised areas in the form of bump-like raised areas (52a) and/or in the form of short beads (52a') which in relation to the combustion chamber through-opening (20; 22) extend approximately in the radial direction or obliquely thereto.

3. Cylinder head gasket comprising an at least substantially metallic gasket plate which comprises at least one sheet metal layer (16; 18), at least one combustion chamber through-opening (20; 22), an elastically height-deformable sealing bead (30; 32) which is formed in a metal layer and surrounds the combustion chamber through-opening in a manner closed within itself, and - in relation to said sealing bead - both radially inside and radially outside the latter a deformation limiting device (34, 50; 34, 50') which limits the bead deformation and at least partially surrounds the combustion chamber through-opening, which deformation limiting device - as seen in a plan view of the gasket plate - is formed adjacent to the sealing bead and in a metal layer (16; 18) by a deformation of the latter such that the metal layer has at least one raised area (34, 52a; 34, 52a') in at least one of its main surfaces in the region of the deformation limiting device, and the total thickness of the metal layer in the region of the deformation limiting device is greater than the original thickness of the metal layer, **characterised in that** the two deformation limiting devices (34, 50; 34, 50') are configured differently, **in that** one deformation limiting device comprises a bead (34) which - as seen in a plan view of the gasket plate - forms over at least part of its length an at least almost complete meander which extends in the circumferential direction of the combustion chamber through-opening (20; 22), and **in that** the other deformation limiting device (50; 50') comprises a plurality of discrete raised areas (52a; 52a') as seen in a plan view of the gasket plate and in the circumferential direction of the combustion chamber through-opening, which raised areas - as seen in a plan view of the gasket plate - form a two-dimensional pattern of discrete, bump-like raised areas (52a).

4. Cylinder head gasket according to claim 2 or 3, **characterised in that** the bump-like raised areas (52a) of the other deformation limiting device (50) are arranged in the manner of a honeycomb pattern.

5. Cylinder head gasket according to one of claims 1 to 4, **characterised in that** the raised areas (52a) of the other deformation limiting device (50) are all configured identically.

6. Cylinder head gasket according to one of claims 2 to 5, **characterised in that** the bump-like raised areas (52a) are arranged in groups which are arranged at intervals from one another in the circumferential direction of the combustion chamber through-opening (20; 22).

7. Cylinder head gasket according to claim 2, **characterised in that** the short beads (52a') form a ring of short beads which completely or partially enclose the combustion chamber through-opening (20; 22).

8. Cylinder head gasket according to claim 7, **characterised in that** the short beads (52a') are arranged in groups which are arranged at intervals from one another in the circumferential direction of the combustion chamber through-opening (20; 22).

9. Cylinder head gasket according to claim 2, **characterised in that** the short beads (52a') are all configured identically.

10. Cylinder head gasket according to one of the preceding claims, **characterised in that** the meandering bead (34) is formed in a first and the other deformation limiting device (50; 50') is formed in a second metal layer (16 and 18) of the gasket plate.

11. Cylinder head gasket according to claim 10, **characterised in that** the meandering bead (34) is provided on a metal layer which is close to the cylinder head when the gasket is installed, and the other deformation limiting device (50; 50') is provided on a metal layer which is close to the engine block.

12. Cylinder head gasket according to one of the preceding claims for an engine with a cylinder liner (12), **characterised in that** the sealing bead (30; 32) and the deformation limiting devices (34, 50; 34, 50') are arranged in such a way that, when the gasket is installed, the meandering bead (34) lies over the cylinder liner (12) and the other deformation limiting device (50; 50') lies radially outside the cylinder liner.

13. Cylinder head gasket according to claim 12, **characterised in that** the sealing bead (30; 32) also lies over the cylinder liner (12).

## Revendications

1. Joint de culasse avec une plaque d'étanchéité au moins essentiellement métallique, qui présente au moins une couche de tôle métallique (16 ; 18), au moins une ouverture de passage de chambre de combustion (20 ; 22), une moulure d'étanchéité (30 ; 32) déformable en hauteur de manière élastique, entourant l'ouverture de passage de chambre de combustion fermée en soi, réalisée dans une couche métallique et - par rapport à la moulure d'étanchéité - aussi bien radialement à l'intérieur que radialement à l'extérieur de la moulure d'étanchéité, un dispositif de limitation de déformation (34, 50 ; 34, 50') entourant au moins partiellement l'ouverture de passage de chambre de combustion, limitant la déformation de moulure, qui est réalisé - dans une vue en élévation de la plaque d'étanchéité - de manière voisine à la moulure d'étanchéité et dans une couche métallique (16 ; 18) par une déformation telle de la dernière que la couche métallique présente dans au moins une de ses surfaces principales dans la zone du dispositif de limitation de déformation au moins une élévation (34, 52a ; 34, 52a') et l'épaisseur totale de la couche métallique dans la zone du dispositif de limitation de déformation est supérieure à l'épaisseur d'origine de la couche métallique, **caractérisé en ce que** les deux dispositifs de limitation de déformation (34, 50 ; 34, 50') sont conçus différemment, **en ce que** l'un des dispositifs de limitation de déformation agencé radialement à l'intérieur de la moulure d'étanchéité (30, 32) présente une moulure (34) fermée en soi et entourant l'ouverture de passage de chambre de combustion laquelle moulure forme dans une vue en élévation de la plaque d'étanchéité sur au moins une partie de sa longueur, un méandre s'étendant dans le sens périphérique de l'ouverture de passage de chambre de combustion (20 ; 22) et **en ce que** l'autre dispositif de limitation de déformation (50, 50') agencé radialement à l'extérieur de la moulure d'étanchéité présente une pluralité d'élévations (52a, 52') discrètes dans une vue en élévation de la plaque d'étanchéité ainsi que dans le sens périphérique de l'ouverture de passage de chambre de combustion.

2. Joint de culasse selon la revendication 1, **caractérisé en ce que** dans une vue en élévation de la plaque d'étanchéité, l'autre dispositif de limitation de déformation (50 ; 50') présente un modèle bidimensionnel d'élévations discrètes en forme d'élévations (52a) de type noppes et/ou en forme de moulures courtes (52a') s'étendant à peu près dans le sens radial par rapport à l'ouverture de passage de chambre de combustion (20 ; 22) ou en biais par rapport à celle-ci.

3. Joint de culasse avec une plaque d'étanchéité au moins essentiellement métallique, qui présente au moins une couche de tôle métallique (16 ; 18), au moins une ouverture de passage de chambre de combustion (20 ; 22), une moulure d'étanchéité (30 ; 32) déformable en hauteur de manière élastique, entourant l'ouverture de passage de chambre de combustion fermée en soi, réalisée dans une couche métallique et - par rapport à la moulure d'étanchéité - aussi bien radialement à l'intérieur que radialement à l'extérieur de la moulure d'étanchéité un dispositif de limitation de déformation (34, 50 ; 34, 50') entourant au moins partiellement l'ouverture de passage de chambre de combustion, limitant la déformation de moulure, qui est réalisé - dans une vue en élévation de la plaque d'étanchéité - de manière voisine à la moulure d'étanchéité et dans une couche métallique (16 ; 18) par une déformation telle de la dernière que la couche métallique présente dans au moins une de ses surfaces principales dans la zone du dispositif de limitation de déformation au moins une élévation (34, 52a ; 34, 52a') et l'épaisseur totale de la couche métallique dans la zone du dispositif de limitation de déformation est supérieure à l'épaisseur d'origine de la couche métallique, **caractérisé en ce que** les deux dispositifs de limitation de déformation (34, 50 ; 34, 50') sont conçus différemment, **en ce que** l'un des dispositifs de limitation de déformation présente une moulure (34), qui dans une vue en élévation de la plaque d'étanchéité forme sur au moins une partie de sa longueur, un méandre du moins presque complet, s'étendant dans le sens périphérique de l'ouverture de passage de chambre de combustion (20 ; 22), et **en ce que** l'autre dispositif de limitation de déformation (50, 50') présente une pluralité d'élévations (52a ; 52') discrètes dans une vue en élévation de la plaque d'étanchéité ainsi que dans le sens périphérique de l'ouverture de passage de chambre de combustion, qui forment dans une vue en élévation de la plaque d'étanchéité un modèle bidimensionnel d'élévations (52a) discrètes de type noppes.

4. Joint de culasse selon la revendication 2 ou 3, **caractérisé en ce que** les élévations (52a) de type noppes de l'autre dispositif de limitation de déformation (50) sont agencées à la manière d'un modèle en nid d'abeilles.

5. Joint de culasse selon l'une quelconque des revendications 1 à 4, **caractérisé en ce que** les élévations (52a) de l'autre dispositif de limitation de déformation (50) sont toutes conçues de manière identique.

6. Joint de culasse selon l'une quelconque des revendications 2 à 5, **caractérisé en ce que** les élévations (52a) de type noppes sont agencées en groupes, qui sont agencés à distance les uns des autres dans le sens périphérique de l'ouverture de passage de chambre de combustion (20 ; 22).

7. Joint de culasse selon la revendication 2, **caractérisé en ce que** les moulures courtes (52a') forment une couronne de moulures courtes entourant entièrement ou partiellement l'ouverture de passage de chambre de combustion (20 ; 22).

8. Joint de culasse selon la revendication 7, **caractérisé en ce que** les moulures courtes (52a') sont agencées en groupes, qui sont agencés à distance les uns des autres dans le sens périphérique de l'ouverture de passage de chambre de combustion (20 ; 22).

9. Joint de culasse selon la revendication 2, **caractérisé en ce que** les moulures courtes (52a') sont toutes conçues de manière identique.

10. Joint de culasse selon l'une quelconque des revendications précédentes, **caractérisé en ce que** la moulure en méandre (34) est réalisée dans une première couche métallique et l'autre dispositif de limitation de déformation (50 ; 50') dans une deuxième couche métallique (16 et/ou 18) de la plaque d'étanchéité.

11. Joint de culasse selon la revendication 10, **caractérisé en ce que** la moulure en méandre (34) est prévue au niveau d'une couche métallique proche du joint de culasse lorsque le joint est monté et l'autre dispositif de limitation de déformation (50 ; 50') au niveau d'une couche métallique proche du bloc-moteur.

12. Joint de culasse selon l'une quelconque des revendications précédentes pour un moteur avec une chemise de cylindre (12), **caractérisé en ce que** la moulure d'étanchéité (30 ; 32) et les dispositifs de limitation de déformation (34, 50 ; 34, 50') sont agencés de sorte que lorsque le joint est monté, la moulure en méandre (34) se trouve au-dessus de la chemise de cylindre (12) et l'autre dispositif de limitation de déformation (50 ; 50') se situe radialement à l'extérieur de la chemise de cylindre.

13. Joint de culasse selon la revendication 12, **caractérisé en ce que** aussi la moulure d'étanchéité (30 ; 32) se trouve au-dessus de la chemise de cylindre (12).
